# EUROPÄISCHE PATENTSCHRIFT

(11) **EP 1 251 980 B1**
(45) Veröffentlichungstag und Bekanntmachung des Hinweises auf die Patenterteilung: **03.12.2003**
(21) Anmeldenummer: 00990747.8
(22) Anmeldetag: 14.12.2000
(51) Int. Cl.: B22D 11/04, B24B 5/40

(54) **VERFAHREN UND VORRICHTUNG ZUM BEARBEITEN VON HOHLRAUMWÄNDEN VON STRANGGIESSKOKILLEN**
METHOD AND DEVICE FOR WORKING CAVITY WALLS IN CONTINUOUS CASTING MOULDS
PROCEDE ET DISPOSITIF DE TRAITEMENT DE PAROIS DE SOUFFLURE DE COQUILLES DE COULAGE CONTINU

(30) Priorität: 29.12.1999 CH 992394
(43) Veröffentlichungstag der Anmeldung: 30.10.2002
(73) Patentinhaber: CONCAST STANDARD AG, 8027 Zürich (CH)
(72) Erfinder: REUSSER, Christian, CH-5210 Windisch (CH)
(86) Internationale Anmeldenummer: EP0012706
(87) Internationale Veröffentlichungsnummer: WO01049432

(56) Entgegenhaltungen:
- BR-A- 9 500 402
- DE-A- 1 577 330
- DE-A- 19 747 798
- DATABASE WPI Section Ch, Week 199031 Derwent Publications Ltd., London, GB; Class A32, AN 1987-291583 XP002150594 & JP 62 236662 A (NAGASE IRON WORKS CO LTD), 16. Oktober 1987 (1987-10-16)

## Beschreibung

Die Erfindung betrifft ein Verfahren zum Bearbeiten von Hohlraumwänden von Stranggiesskokillen gemäss dem Oberbegriff des Anspruchs 1 und eine Vorrichtung gemäss dem Oberbegriff des Anspruchs 9.

Für die Herstellung von Stranggiesskokillen, insbesondere für die Herstellung der Geometrie des Formhohlraumes bei rohrförmigen Knüppel-, Vorblock- und Profilformaten, sind verschiedene Herstellungsverfahren wie Kaltverformen auf einen Dorn oder spanabhebende Bearbeitung etc. bekannt.

Die bekannten Herstellungsverfahren mittels Kalt- oder Explosionsverformung auf einen Dom sind kostspielig, weil für jeden Strangquerschnitt bzw. jeden Konizitätsverlauf ein Dom hergestellt werden muss, der insbesondere beim Explosionsverformen eine kurze Lebensdauer aufweist. Eine Herstellung mittels spanabhebender Bearbeitung stösst anderseits an Grenzen, weil die Formen der Kokillenhohlräume aus stranggiesstechnischen Gründen immer komplizierter geworden sind. Eine zusätzliche Schwierigkeit verursacht bei Rohrkokillen aber auch das kleine Verhältnis der lichten Weite zur Länge des Formhohlraumes, weil dadurch die Gestaltung der Bearbeitungsvorrichtung stark eingeschränkt ist. Nebst Kokillen mit einem geraden Formhohlraum und mit einem allseitig gleichmässigen Giesskonus für einen quadratischen oder runden Knüppeiquerschnitt, werden heute mehrheitlich Kokillen mit gebogenen Formhohlräumen für Kreisbogenstranggiessanlagen verwendet, was die Dimensionierung der Bearbeitungsvorrichtung zusätzlich einschränkt.

Im weiteren werden zur Verbesserung der Strangqualität und zur Erhöhung der Giessleistung Kokillen mit in der Längsrichtung der Kokille variierenden Giesskonizitäten, beispielsweise mit parabelförmigem Verlauf der Giesskonizität, verwendet. Eine weitere wesentliche Verbesserung der Giessleistung konnte mittels Konvex-Kokillen gemäss der Konvex-Technologie, die aus EP 0 498 296 bekannt ist, erreicht werden. Bei solchen Kokillen sind auf einem Teil der Kokillenlänge die Kokillenwände mit konvexen Ausbauchungen versehen, die bei rechteckigen Formhohlräumen in eine ebene Wand, bei runden Formhohlräumen in einen runden Strangquerschnitt auslaufen. Im weiteren sind Kokillenhohlräume bekannt, die in den Eckbereichen kleinere Giesskonizitäten als zwischen den Eckbereichen aufweisen. Solche Kokillenhohlräume sind mit bekannten spanabhebenden Werkzeugmaschinen sowohl wegen der komplexen Geometrie einerseits und wegen einer schlechten Zugänglichkeit im rohrförmigen Kokillenkörper anderseits als auch wegen des ungünstigen Verhältnisses zwischen Kokillenlänge und lichtem Kokillenquerschnitt nicht herstellbar.

Ein repräsentatives Beispiel für eine spanabhebende, zur Bearbeitung von Hohlraumwänden geeignete Werkzeugmaschine ist beispielsweise aus DE 1 577 330 bekannt. DE 1 577 330 beschreibt eine Schleifmaschine zum Bearbeiten der Innenflächen von Stahlwerkskokillen, d.h. Kokillen zum Blockgiessen. Die Schleifmaschine umfasst einen Tragarm, dessen Längsachse eine Mittelstellung in einer horizontalen Richtung definiert. Der Tragarm ist an einem Ende auf einem in Richtung der Mittelstellung verfahrbaren Wagen derart gelagert, dass der Tragarm um eine vertikale und eine horizontale, senkrecht zur Längsachse des Tragarms ausgerichteten Achse verschwenkbar ist, und trägt an seinem anderen Ende eine Schleifscheibe, deren Rotationsachse in horizontaler Richtung quer zur Längsachse des Tragarms angeordnet ist. Eine derartige Anordnung der Schleifscheibe ermöglicht die Bearbeitung ebener Innenflächen, die bei Stahlwerkskokillen üblich sind. Beliebig gekrümmte Innenflächen, wie sie bei Stranggiesskokillen üblich sind, und Eckenbereiche zwischen gekrümmten Innenflächen lassen sich mit einer derartigen Anordnung der Schleifscheibe nicht mit der erforderlichen Genauigkeit bearbeiten.

Der Erfindung liegt die Aufgabe zugrunde, ein Verfahren und eine Vorrichtung zu schaffen, die zur Innenbearbeitung von Kokillenrohren für Knüppel-, Vorblockund Profilstränge geeignet sind. Insbesondere sollen Kokillenhohlräume mit längs der Kokille variierenden Konizitätsgraden, mit parabelförmiger Konizität, mit konvexen Seitenwänden, die auf eine ebene Wandfläche auslaufen, oder mit speziellen Eckkonfigurationen mit Konizitätsgraden zwischen 0 und 1 %/m durch spanabhebende und polierende Arbeitsoperationen mit einer NC-gesteuerten Maschine herstellbar sein. Im weiteren soll eine hohe Formhohlraumgenauigkeit und Oberflächengüte erreicht und auf der Grundlage eines kontrollierten Fertigungsprozesses, der einen automatischen Ablauf sowie eine hohe Zerspanungsleistung bei optimalem Spanauswurf gewährleistet, ein kostengünstiges Herstellungsverfahren geschaffen werden.

Diese Aufgabe wird gemäss der Erfindung durch die Summe der Merkmale des Anspruchs 1 bzw. des Anspruchs 9 gelöst.

Das erfindungsgemässe Verfahren bzw. die erfindungsgemässe Vorrichtung ermöglichen es erstmals, mittels einer spanabhebenden Bearbeitungsmaschine Kokillenhohlräume für Knüppel-, Vorblock- und Profilstränge mit einer längs der Kokille variierenden Konizität, mit parabelförmiger Konizität oder mit konvex ausgebauchten Seitenwänden mit einer NC-gesteuerten Maschine herzustellen. im weiteren kann durch das Verfahren bzw. die Vorrichtung eine hohe Formhohlraumgenauigkeit und Oberflächengüte erreicht werden. Weitere Vorteile sind ein hoher Automatisierungsgrad und eine hohe Zerspanungsteistung bei optimalem Spanauswurf aus dem Kokillenhohlraum. Die Summe dieser Vorteile führen gesamthaft zu einem kostengünstigen Herstellungsverfahren für neue Kokillen oder zu einem kostengünstigen Nachbearbeitungsverfahren für gebrauchte und nach Gebrauch auf der Hohlraumseite neu beschichtete Kokillen.

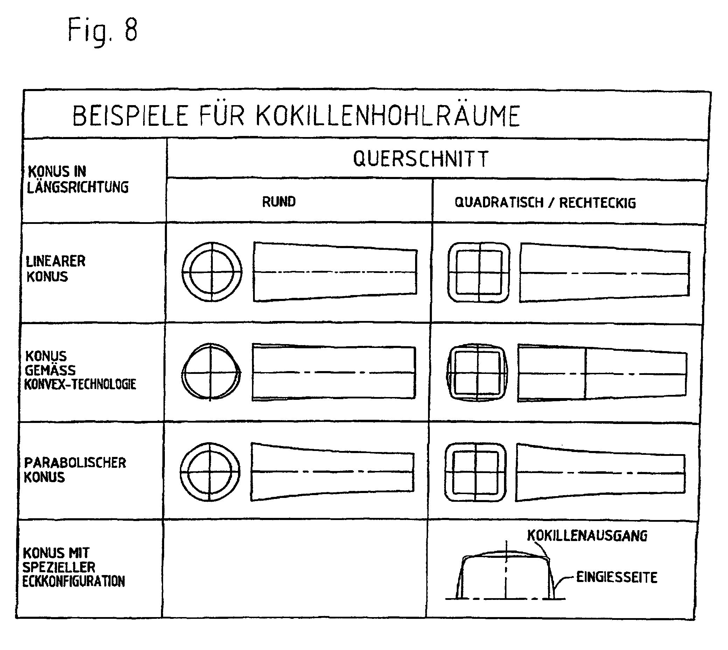

Mit Fig. 8, die "Beispiele für Kokillenhohlräume" darstellt und am Schluss des Textes erläutert ist, soll aufgezeigt werden, wie vielfältig sich die Konfigurationen von Kokillenhohlräumen entwickelt haben und sich auch in Zukunft weiter entwickeln werden. Neben den dargestellten Querschnitten sind auch Rohrkokillen für Trägerprofile wie "Dogbone" als schwierig bearbeitbar zu bezeichnen.

Kokillen können mit ihrer Längsachse im wesentlichen vertikal auf einem Maschinentisch aufgespannt und mit einem vertikalen Werkzeugtragarm bearbeitet werden. Gemäss einem Ausführungsbeispiel ist es vorteilhaft, wenn die Kokille mit ihrer Längsachse horizontal auf einem Tisch aufgespannt und der Werkzeugtragarm im wesentlichen horizontal in den Kokillenhohlraum eingeführt wird. Bei einer solchen Anordnung verfährt die Maschine mit Vorteil den Arm mit Hilfe von Bewegungseinrichtungen in einer Ebene und den Tisch längs einer Achse senkrecht zu dieser Ebene.

Die für den Werkzeugtragarm erforderliche Eindringtiefe in Längsrichtung des Rohres kann reduziert und dabei die Genauigkeit und Oberflächengüte der bearbeiteten Flächen verbessert werden, wenn, gemäss einem Ausführungsbeispiel, der Tisch nach der Bearbeitung etwa der halben Kokillenlänge um eine Achse, die quer zur Aufspannebene des Tisches verläuft, um 180° verschwenkt wird. Durch diesen zusätzlichen Verfahrensschritt kann der Arm für eine Bearbeitungstiefe des Kokillenhohlraumes von 400 - 600 mm, d.h. für etwa eine halbe Kokillenlänge, ausgelegt werden.

Die Relativbewegung zwischen dem Werkzeug und den Formhohlraumwänden und die Rotationsbewegung des Armes um seine Längsachse kann in vielen verschiedenen Kombinationen zum spanabhebenden Bearbeiten angewendet werden. Gemäss einem weiteren Verfahrensbeispiel können bei quadratischen und runden Kokillenquerschnitten alle Kokillenhohlraumformen gemäss Fig. 8 bearbeitet werden, wenn durch die NC-Steuerung in einem ersten Schritt der Arm durch eine Rotationsbewegung um seine eigene Längsachse in eine Bearbeitungsposition am Formhohlraumumfang gebracht und festgeklemmt und anschliessend in einem 2. Schritt mit dem rotierenden Werkzeug ein Teilstück der Formhohlraumoberfläche in einer Simultanbewegung in einer, zwei oder drei Raumrichtungen bearbeitet wird. Diese Schrittfolge kann fortgesetzt werden, bis der gesamte Formhohlraum die gewünschte Geometrie aufweist.

Die Lebensdauer eines Kokillenrohres kann durch mehrmalige Beschichtung mit einem Werkstoff und eine nachfolgende spanabhebende Bearbeitung ganz wesentlich verlängert und dadurch die Kokillenkosten pro Tonne gegossenem Stahl reduziert werden.

Zur Verbesserung der Bewegungsfreiheit des Armes und des Werkzeugs innerhalb des Formhohlraumes wird der Arm nach einem weiteren Ausführungsbeispiel mit einem quadratischen Querschnitt mit Eckabrundungen versehen und das Werkzeug am Ende des Armes an einer speziellen Werkzeugaufnahmescheibe auswechselbar befestigt. Um den Querschnitt des Armes für einen bestimmten Formhohlraumquerschnitt so gross wie möglich dimensionieren zu können, um einerseits das Biegemoment zu vergrössern und um anderseits Vibrationen zu vermeiden, wird zusätzlich vorgeschlagen, die Achse für die Rotationsbewegung des Werkzeuges in einem Abstand zur Längsmittelachse des Armes anzuordnen. Vorteilhafterweise wird der Abstand der Rotationsachse des Werkzeuges 10 - 25 % des Durchmessers eines in den Armquerschnitt einschreibbaren Kreises gewählt. Eine weitere vorteilhafte Optimierung ergibt sich, wenn das Verhältnis des Rotationsdurchmessers des Werkzeuges zum Rotationsdurchmesser des Armes im Bereich zwischen 1 : 0,7 und 1 : 0,9 liegt.

Um eine hohe Polierleistung mit grossflächigen Polierwerkzeugen zu erreichen, kann, gemäss einem weiteren Ausführungsbeispiel, ein anderer Arm mit zwei im wesentlichen quer zur Längsachse des Armes angeordneten Rotationsachsen für zwei scheibenförmige Polierwerkzeuge eingesetzt werden.

Zur Uebertragung des Antriebes für die spanabhebenden und/oder polierenden Werkzeuge vom Maschinenständer bis zur Rotationsachse des Werkzeuges wird, gemäss einem Ausführungsbeispiel, vorgeschlagen, dass im Arm eine axiale Antriebswelle mit Zahnradgetrieben vorgesehen ist, um eine torsionssteife Kraftübertragung zu erzielen. Als Alternative ist ein Riemenantrieb für die Werkzeuge denkbar.

Ausführungsbeispiele der Erfindung sowie weitere Vorteile derselben sind nachfolgend anhand von Figuren näher erläutert. Es zeigen:
- Fig. 1: eine Seitenansicht der erfindungsgemässen Vorrichtung,
- Fig. 2: eine Draufsicht auf die Vorrichtung gemäss Fig. 1,
- Fig. 3: eine Seitenansicht auf einen Arm mit einem spanabhebenden Werkzeug,
- Fig. 4: eine Ansicht gemäss Pfeil IV in Fig. 3,
- Fig. 5: eine Ansicht auf einen Arm mit zwei Polierwerkzeugen,
- Fig. 6: eine Ansicht in einen Kokillenhohlraum mit eingefahrenem Arm mit einem spanabhebenden Werkzeug,
- Fig. 7: eine Ansicht auf ein weiteres Beispiel eines Armes, und
- Fig. 8: Beispiele für die Geometrie der Begrenzungsflächen der Hohlräume typischer Stranggiesskokillen.

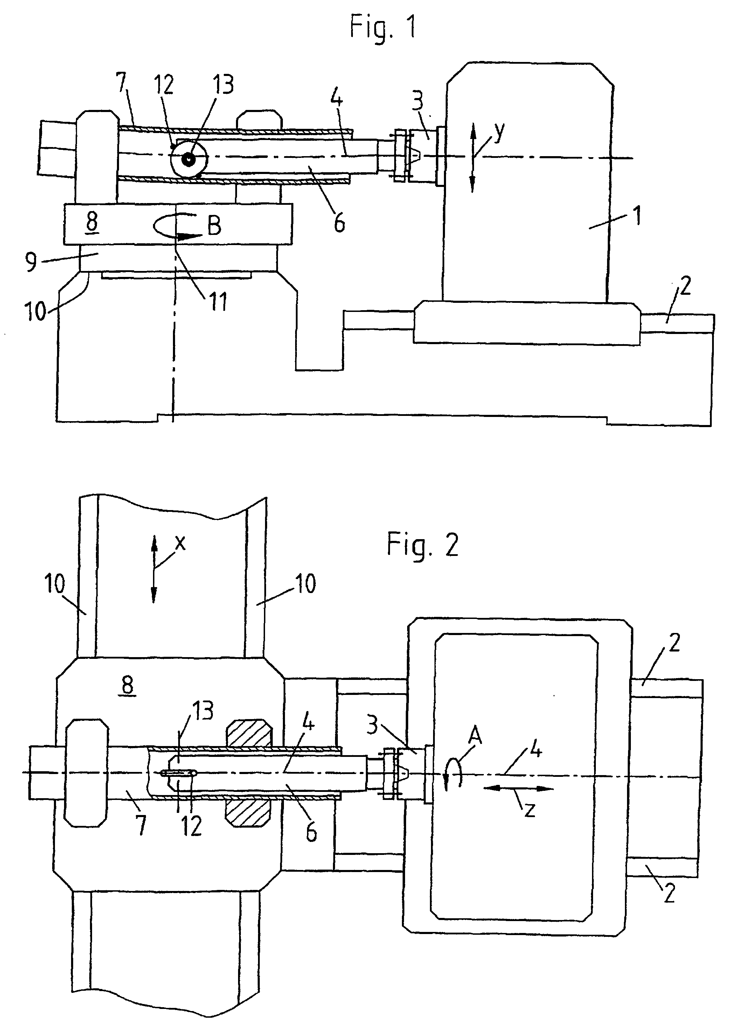

Fig. 1 und 2 zeigen eine Maschine mit einer Vorrichtung zur Innenbearbeitung von Rohren mittels spanabhebenden und/oder polierenden Werkzeugen, insbesondere für eine Innenbearbeitung in Kokillenhohlräumen von Stranggiesskokillen. Als spanabhebendes Werkzeug ist beispielsweise ein Fräs- oder ein Schleifwerkzeug denkbar. Die Maschine besteht aus einem Maschinenständer 1, der sich auf Führungen 2 abstützt und sich in einer z-Achse mittels eines Antriebs bewegen kann. Am Maschinenständer 1 ist ein Maschinenkopf 3 angeordnet, der in einer y-Achse heb- und senkbar ist. Der Maschinenkopf 3 ist im weiteren mit einer Einrichtung zur Erzeugung einer Rotationsbewegung um eine horizontale Achse 4, wie durch Pfeil A angedeutet, versehen. An den Maschinenkopf 3 ist ein Arm 6 ankuppelbar, der mit spanabhebenden oder polierenden Werkzeugen ausgerüstet ist. Der Arm 6 ist, zusammen mit dem Maschinenkopf 3, um seine Längsachse 4, die in diesem Beispiel horizontal angeordnet ist, rotier- bzw. verschwenkbar. Der Arm 6 ist leicht auswechselbar, damit ein Werkzeugwechsel zwischen einem spanabhebenden und einem polierenden Werkzeug bei kurzen Stillstandszeiten durchgeführt werden kann. Ein am Arm 6 befestigtes spanabhebendes oder polierendes Werkzeug 12 ist um eine Achse 13 drehbar.

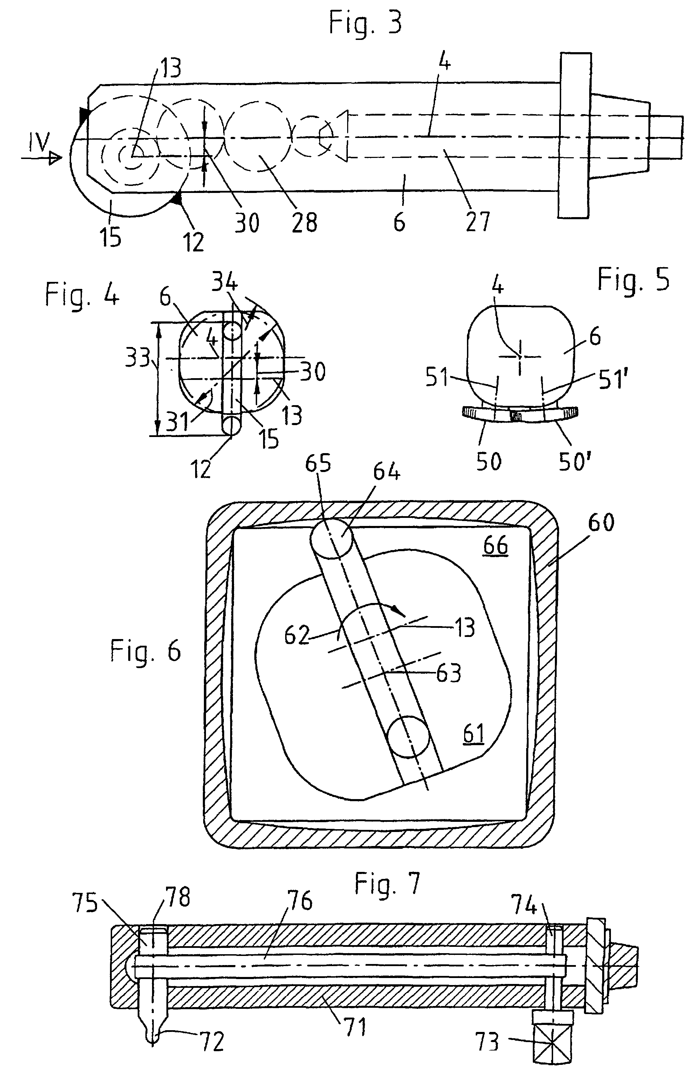

Zu diesem Zweck ist der Arm 6 mit einer axial angeordneten Antriebswelle 27 und mit einem Zahnradgetriebe 28 (Fig. 3) versehen.

Ein rohrförmiges Werkstück, insbesondere ein Kokillenrohr 7, ist horizontal auf einem Tisch 8 aufgespannt. Der Tisch 8 ist mit seinem Ständer 9 auf Führungen 10 abgestützt und in einer x-Achse bewegbar. Im weiteren ist der Tisch 8 um eine vertikale Achse 11 verschwenkbar und kann eine Drehbewegung B um einen beliebigen Winkel ausführen.

Die Maschine ist so ausgelegt, dass über eine NC-Steuerung der Arm 6 in der y-und z-Achse und simultan der Tisch 8 in der x-Achse bewegt werden kann. Ebenfalls simultan kann der Arm 6 um die Achse 4 verschwenkt werden und das Werkzeug 12 um eine Achse 13 rotieren.

In den Fig. 3 und 4 ist der Arm 6 mit einem spanabhebenden Werkzeug 12 versehen. Der Querschnitt des Armes 6 ist im wesentlichen quadratisch mit Eckabrundungen. Das Werkzeug 12 ist am Ende des Armes 6 an einer Werkzeugaufnahmescheibe 15 auswechselbar befestigt. Die Achse 13 für die Rotationsbewegung des Werkzeuges 12 ist in einem Abstand 30 zur Längsmittelachse 4 des Armes 6 angeordnet. Der Abstand 30 ist in einer Grössenordnung von 10 - 25 % des Durchmessers 31 eines in den Armquerschnitt einschreibbaren Kreises. Der Rotationsdurchmesser 33 des Werkzeuges 12 wird mit Vorteil etwas grösser gewählt als der Rotationsdurchmesser 34 des Armes 6. Für das Verhältnis des Rotationsdurchmessers 33 des Werkzeuges 12 zum Rotationsdurchmesser 34 des Armes 6 wird ein Wert zwischen 1 : 0,7 und 1 : 0,9 angestrebt. Die Länge des Armes 6 kann so gestaltet werden, dass er für eine Bearbeitungslänge von etwa einer halben Kokillenlänge, d.h. für 400 - 600 mm, ausgelegt ist.

In Fig. 5 ist ein Arm 6 mit zwei Polierwerkzeugen 50, 50' ausgerüstet. Diese beiden Werkzeuge 50, 50' rotieren um Achsen 51, 51', die quer zur Längsachse 4 des Armes 6 angeordnet sind. Zum Polieren sind verschiedene im Stand der Technik bekannte Polierwerkzeuge anwendbar.

Die Bearbeitung eines neuen Rohrkörpers bzw. einer bereits gebrauchten, im Kokillenhohlraum ganz oder teilweise neu beschichteten Kokille kann wie folgt durchgeführt werden. Das Rohr wird auf den Tisch 8 aufgespannt und der Arm 6 in den Kokillenhohlraum eingefahren. Eine erste Hälfte der Länge des Kokillenhohlraumes wird durch NC-gesteuerte Kombinationen der Bewegungen in der x-, y- und z-Achse sowie der Rotation des spanabhebenden Werkzeugs bearbeitet.

Die Rotation des Armes 6 um seine Längsachse 4 kann während der Bearbeitung oder während einer Unterbrechung der Bearbeitung erfolgen. Wenn die Bearbeitung in der ersten Hälfte der Kokillenlänge beendet ist, wird der Arm aus dem Kokillenhohlraum herausgefahren und die Kokille 7 in der gleichen Aufspannung zusammen mit dem Tisch um 180° um die vertikale Tischachse 11 verschwenkt. Der Arm 6 wird nun erneut in den Kokillenhohlraum eingefahren und die zweite Hälfte der Länge des Kokillenhohlraumes wird bearbeitet. Vor einer folgenden Polieroperation wird der Arm 6 mit dem spanabhebenden Werkzeug gegen einen Arm mit einem oder zwei Polierwerkzeugen ausgetauscht. Auch das Polieren erfolgt in der gleichen Aufspannung durch ein- oder mehrmaliges Verschwenken des Kokillenrohres um 180°. Die Bearbeitung kann durch die NC-Steuerung und/oder eine Nachführung des Werkzeuges derart kontrolliert werden, dass das Werkzeug einen vorgegebenen Anpressdruck auf die Kokillenwand ausübt.

In Fig. 6 ist ein Rohr 60 mit einem eingefahrenen Arm 61 in Bearbeitungsposition dargestellt. Ein Kokillenhohlraum 66 hat die Konfiguration einer Konvex-Kokille. Durch eine Rotation 62 des Armes 61 um seine Längsachse 63 ist ein Fräser 64 in eine Bearbeitungsposition 65 im Hohlraum 66 gebracht worden und kann nun NC-gesteuert die Bearbeitung vornehmen. Aus diesem Bild kann entnommen werden, dass Kokillenhohlräume mit verschiedensten komplexen Hohlraumkonfigurationen, wie sie in Fig. 8 mit Beispielen für runde und rechteckige Querschnitte dargestellt sind, bearbeitbar sind.

In Fig. 7 ist ein Arm 71 mit einem Fräswerkzeug 72 und einem Antriebsmotor 73 für das Fräswerkzeug 72 ausgerüstet. Zwischen der Antriebswelle 74 und der Fräserwelle 75 ist ein Antriebsriemen 76 oder ein äquivalentes Antriebselement vorgesehen. Der Motor 73 ist bei dieser Lösung direkt am Arm 71 angeflanscht und ermöglicht damit sowohl eine einfache und schlanke Armkonstruktion. Im Betrieb erzeugt dieser Riemenantrieb relativ wenig Wärme und ermöglicht deshalb eine schnelle und präzise Bearbeitung.

Anstelle einer horizontalen Aufspannung eines Kokillenrohres auf dem Tisch 8 ist beispielsweise auch eine vertikale Rohraufspannung möglich. Auch die Zuordnung der Bewegungen in der x-, y- und z-Achse auf das Werkzeug und den Tisch können gegenüber dem beschriebenen Beispiel unterschiedlich gewählt werden.

Bei einer weiteren Ausführungsform der erfindungsgemässen Vorrichtung ist vorgesehen, dass die Achse, auf der eines der Werkzeuge rotierbar gelagert ist, derart am Arm angeordnet ist, dass die Ausrichtung der Achse relativ zum Arm verändert werden kann. Beispielsweise könnte die Achse so gelagert sein, dass sie in einer Ebene senkrecht zur des Arms verschwenkbar ist. Eine solche Weiterbildung der erfindungsgemässen Vorrichtung bietet zusätzliche Freiheitsgrade, um die Ausrichtung des Werkzeugs relativ zu einer zu bearbeitenden Fläche geeignet anzupassen.

Zur Innenbearbeitung von Kokillenrohren mit in Längsrichtung gebogenem Formhohlraum kann es vorteilhaft sein, den Arm 6 in seiner Längsrichtung mit einer Krümmung auszustatten, die an die Geometrie des Formhohlraums angepasst ist. Zur Feinbearbeitung von Eckbereichen bei Kokillen mit einem eckigen Formhohlraum ist es vorteilhaft, mittels Drehungen des Tischs 8 um die Achse 11 die Ausrichtung des zur Bearbeitung vorgesehenen Werkzeugs relativ zu der räumlichen Anordnung des jeweiligen Eckbereichs zu optimieren. Eine solche Optimierung führt zu verbesserten Resultaten bei der Bearbeitung von Formhohlraumwänden mit einer grossen Konizität in den Eckbereichen und/oder bei Kokillen mit einem in Längsrichtung gebogenen Formhohlraum und eckigem Querschnitt.

Fig. 8 zeigt 7 Beispiele für die Geometrie der Begrenzungsflächen der Hohlräume typischer Stranggiesskokillen. Die Beispiele sind in den Spalten der Tabelle nach der Form eines Querschnitts der jeweiligen Kokille geordnet: (i) runde Querschnitte und (ii) quadratische bzw. rechteckige Querschnitte. In den Zeilen der Tabelle werden die Beispiele nach der Art des Konus geordnet, der die Verjüngung des jeweiligen Hohlraums (d.h. die Schrumpfung der Querschnittsflächen des Hohlraums) in Längsrichtung der Kokille auf einem Weg von der Eingiessseite der Kokille zum Kokillenausgang definiert. Die Form des jeweiligen Konus bestimmt, wie und in welchem Masse die Begrenzungsfläche des Hohlraums an die Form eines Stranges angepasst ist, der den Hohlraum in Richtung auf den Kokillenausgang durchläuft und dabei aufgrund einer thermisch induzierten Schrumpfung einer Formveränderung, gemessen an der Form einer Querschnittsfläche des Stranges, unterzogen wird. Im Falle des linearen Konus, des Konus gemäss der Konvex-Technologie und des parabolischen Konus ist in dem jeweiligen Feld der Tabelle dargestellt: (a) links eine Draufsicht auf die Begrenzungsflächen des Hohlraums, betrachtet in Längsrichtung des Hohlraums von der Eingiessseite in Richtung auf den Kokillenausgang, und (b) rechts ein Längsschnitt durch die Begrenzungsflächen des Hohlraums. Der Konus gemäss der Konvex-Technologie zeichnet sich dadurch aus, dass die Konizität des Konus nicht nur in der Längsrichtung des Hohlraums variabel ist (wie bei einem parabolischen Konus), sondern auch längs der Umfangslinie eines Querschnitts variiert, zumal die Begrenzungsfläche des Hohlraums einer Kokille gemäss der Konvex-Technologie in einem Längsabschnitt an der Eingiessseite konvexe Ausbauchungen aufweist. Kokillen mit einem Konus gemäss der Konvex-Technologie sind aus EP 0 498 296 bekannt Das in der Tabelle als "Konus mit spezieller Eckkonfiguration" bezeichnete Beispiel bezieht sich auf eine aus EP 0 498 296 bekannte Kokille mit einem Konus gemäss der Konvex-Technologie, bei der der Hohlraum in der Mitte der Seitenflächen eine positive Konizität, in den Eckbereichen dagegen eine negative Konizität aufweist.

## Patentansprüche

1. Verfahren zum Bearbeiten von einen Hohlraum (66) einer Stranggiesskokille (7, 60) begrenzenden Wänden mit einem oder mehreren spanabhebenden und/oder polierenden Werkzeugen, wobei eine Rotationsbewegung des Werkzeugs (12, 50, 50', 72) um eine Achse (13, 78), die im wesentlichen quer zur Längsachse (4, 63) eines in den Hohlraum (66) einführbaren Arms (6, 61, 71) zum Tragen des Werkzeugs angeordnet ist, und auf der Hohlraumseite mittels einer Bewegung des Arms (6, 61, 71) eine Relativbewegung zwischen dem Werkzeug (12, 50, 50', 72) und den Wänden erzeugt wird, **dadurch gekennzeichnet, dass** die Bewegung des Arms (6, 61, 71) eine Rotationsbewegung um seine Längsachse (4, 63) umfasst und die Bewegung des Arms durch einen NC-Rechner gesteuert wird.

2. Verfahren nach Anspruch 1, **dadurch gekennzeichnet, dass** die Stranggiesskokille (7) mit ihrer Längsachse entlang einer Aufspannebene auf einem Tisch (8) aufgespannt und der Arm (6, 61, 71) im wesentlichen parallel zur Aufspannebene in den Hohlraum (66) eingeführt wird.

3. Verfahren nach Anspruch 2, **dadurch gekennzeichnet, dass** der Arm (6, 61, 71) und der Tisch (8) simultan bewegt werden.

4. Verfahren nach einem der Ansprüche 2 oder 3, **dadurch gekennzeichnet, dass** der Tisch (8) nach der Bearbeitung einer der Wände längs einer Teillänge der Kokille, vorzugsweise der halben Kokillenlänge, um eine Achse (11), die senkrecht zur Aufspannebene angeordnet ist, um 180° verschwenkt wird.

5. Verfahren nach einem der Ansprüche 1 - 4, **dadurch gekennzeichnet, dass** in einem ersten Schritt der Arm (6, 61, 71) durch eine Rotationsbewegung um seine Längsachse (4, 63) in eine Bearbeitungsposition gebracht, festgeklemmt und anschtiessend mit dem Werkzeug (12, 72) ein Teilstück einer der Wände bearbeitet wird.

6. Verfahren nach einem der Ansprüche 1 - 5, **dadurch gekennzeichnet, dass** die Wände vor einer Bearbeitung mindestens teilweise mit einem Werkstoff beschichtet werden.

7. Verfahren nach einem der Ansprüche 1 - 6, **dadurch gekennzeichnet, dass** die Wände in einem ersten Schritt mittels einem oder mehreren spanabhebenden Werkzeugen (12) bearbeitet, in einem zweiten Schritt der Arm (6) gegen einen ein oder mehrere polierende Werkzeuge (50, 50') tragenden Arm (6) gewechselt und in einem dritten Schritt die Wände geglättet werden.

8. Verfahren nach einem der Ansprüche 1 - 7, **dadurch gekennzeichnet, dass** die Relativbewegung zwischen dem Werkzeug (50) und den Wänden der Stranggiesskokille (60) mindestens teilweise durch Nachführen des Werkzeugs (50) derart kontrolliert wird, dass das Werkzeug (50) einen vorgegebenen Anpressdruck auf eine der Wände ausübt.

9. Vorrichtung zur Bearbeitung von Wänden, die einen Hohlraum (66) einer Stranggiesskokille (7, 60) begrenzen, mit einem oder mehreren spanabhebenden und/oder polierenden Werkzeugen (12, 50, 50', 72), mit einem Tisch (8) zum Aufspannen der Kokille (7, 60) in einer Aufspannebene, mit einem Arm (6, 61, 71), an dem eines oder mehrere der Werkzeuge (12, 50, 50', 72) rotierbar befestigt sind, mit einer Vorrichtung zur Erzeugung einer Rotationsbewegung jedes der Werkzeuge (12, 50, 50', 72) um jeweils eine im wesentlichen quer zur Längsachse (4, 63) des Arms (6, 61, 71) angeordneten Achse (13, 78, 51, 51'), und mit einer Vorrichtung zum Bewegen des Arms (6, 61, 71) derart, dass die Werkzeuge (12, 50, 50', 72) in den Hohlraum (66) einführbar sind und eine Relativbewegung zwischen den Werkzeugen und den Wänden erzeugbar ist, **dadurch gekennzeichnet, dass** die Vorrichtung zum Bewegen des Arms (6, 61, 71) eine Einrichtung zur Erzeugung einer Rotationsbewegung des Arms um seine Längsachse (4, 63) umfasst und NC-gesteuert ist.

10. Vorrichtung nach Anspruch 9, **dadurch gekennzeichnet, dass** die Kokille (60) in Längsrichtung horizontal auf dem Tisch (8) und der Arm (6) horizontal am Maschinenständer (1) angeordnet ist.

11. Vorrichtung nach Anspruch 9 oder Anspruch 10, **dadurch gekennzeichnet, dass** Einrichtungen zur Erzeugung von Simultanbewegungen des Tisches (8) und des Armes (6, 61, 71) vorgesehen sind.

12. Vorrichtung nach einem der Ansprüche 9 - 11, **dadurch gekennzeichnet, dass** eine Einrichtung zum Verschwenken des Tisches (8) um eine Achse (11) quer zur Aufspannebene des Tisches (8), vorzugsweise um eine vertikale Achse (11), vorgesehen ist.

13. Vorrichtung nach einem der Ansprüche 9 -,12, **dadurch gekennzeichnet, dass** der Arm (6, 61, 71) einen im wesentlichen quadratischen Querschnitt mit Eckabrundungen aufweist und dass das Werkzeug (12) an einem Ende des Armes (6, 61, 71) an einer Werkzeugaufnahmescheibe (15) auswechselbar befestigt ist.

14. Vorrichtung nach einem der Ansprüche 9 - 13, **dadurch gekennzeichnet, dass** die Achse (13) für die Rotationsbewegung des Werkzeuges (12) in einem Abstand (30) zur Längsmittelachse (4) des Armes (6, 61, 71) angeordnet ist.

15. Vorrichtung nach Anspruch 14, **dadurch gekennzeichnet, dass** der Abstand (30) der Achse (13) des Werkzeuges 10 - 25 % des Durchmessers (31) eines in den Querschnitt des Armes (6, 61, 71) einschreibbaren Kreises beträgt.

16. Vorrichtung nach einem der Ansprüche 9 - 15, **dadurch gekennzeichnet, dass** der Arm (6, 61, 71) für eine Bearbeitungstiefe des Hohlraumes von etwa einer halben Kokillenlänge, vorzugsweise für 400 mm - 600 mm, ausgelegt ist.

17. Vorrichtung nach einem der Ansprüche 9 -16, **dadurch gekennzeichnet, dass** das Verhältnis des Rotationsdurchmessers (33) des Werkzeuges (12) zum Rotationsdurchmesser (34) des Armes (6, 61, 71) zwischen 1 : 0,7 und 1 : 0,9 liegt.

18. Vorrichtung nach einem der Ansprüche 9 - 17, **dadurch gekennzeichnet, dass** zwei scheibenförmige polierende Werkzeuge (50, 50') vorgesehen sind.

19. Vorrichtung nach einem der Ansprüche 9 - 18, **dadurch gekennzeichnet, dass** die Vorrichtung zur Erzeugung der Rotationsbewegung der Werkzeuge (12, 50, 50', 72) aus einer im Arm (6) axial angeordneten Antriebswelle (27) und Zahnradgetrieben (28) besteht.

20. Vorrichtung nach einem der Ansprüche 9 - 18, **dadurch gekennzeichnet, dass** die Vorrichtung zur Erzeugung der Rotationsbewegung der Werkzeuge (12, 50, 50', 72) einen Riemenantrieb (76) umfasst.

21. Vorrichtung nach einem der Ansprüche 9 - 20, **dadurch gekennzeichnet, dass** der Arm (6, 61, 71) in Längsrichtung gekrümmt ist.

22. Vorrichtung nach einem der Ansprüche 9 - 21, **dadurch gekennzeichnet, dass** die Ausrichtung der Achse (13, 78) relativ zum Arm (6, 61, 71) veränderbar ist.

23. Verwendung der Vorrichtung nach Anspruch 21 zur Bearbeitung der Wände einer Stranggiesskokille mit einem in Längsrichtung gebogenen Hohlraum, **durch gekennzeichnet, dass** die Krümmung des Arms (6, 61, 71) an die Form des Hohlraums angepasst ist.

## Claims

1. Method for the working of walls bounding a cavity (66) of a continuous casting mould (7, 60) with one or more machining and/or polishing tools, in which a rotational movement of the tool (12, 50, 50', 72) is generated about an axis (13, 78) which is arranged substantially obliquely to the longitudinal axis (4, 63) of an arm (6, 61, 71) introducible into the cavity (66) for the supporting of the tool, and by means of a movement of the arm (6, 61, 71) on the cavity side a relative movement is generated between the tool (12, 50, 50', 72) and the walls, **characterised in that** the movement of the arm (6, 61, 71) includes a rotational movement about its longitudinal axis (4, 63) and the movement of the arm is controlled by a numerical control computer.

2. Method according to claim 1, **characterised in that** the continuous casting mould (7) is clamped to a table (8) with its longitudinal axis along a clamping plane and the arm (6, 61, 71) is introduced into the cavity (66) substantially parallel with the clamping plane.

3. Method according to claim 2, **characterised in that** the arm (6, 61, 71) and the table (8) are moved simultaneously.

4. Method according to one of claims 2 or 3,
**characterised in that** the table (8), after the working of one of the walls along a partial length of the mould, preferably half the mould length, is swivelled through 180° about an axis (11) which is arranged normal to the clamping plane.

5. Method according to one of claims 1 to 4,
**characterised in that** in a first step the arm (6, 61, 71) is brought by a rotational movement about its longitudinal axis (4, 63) into a working position and clamped and thereafter a portion of one of the walls is worked with the tool (12, 72).

6. Method according to one of claims 1 to 5,
**characterised in that** the walls, prior to a working, are coated at least partially with a material.

7. Method according to one of claims 1 to 6,
**characterised in that** the walls are in a first step machined by means of one or more machining tools (12), in a second step the arm (6) is exchanged for an arm (6) bearing one or more polishing tools (50, 50') and in a third step the walls are smoothed.

8. Method according to one of claims 1 to 7,
**characterised in that** the relative movement between the tool (50) and the walls of the continuous casting mould (60) is controlled at least partially by adjustment of the tool (50) in such a way that the tool (50) exerts a predetermined contact pressure against one of the walls.

9. Apparatus for the working of walls which bound a cavity (66) of a continuous casting mould (7, 60), with one or more machining and/or polishing tools (12, 50, 50', 72), with a table (8) for the clamping of the mould (7, 60) in a clamping plane, with an arm (6, 61, 71) to which one or more of the tools (12, 50, 50', 72) are rotatably fixed, with an apparatus for generating a rotational movement of each of the tools (12, 50, 50', 72) about respectively an axis (13, 78, 51, 51') arranged substantially obliquely to the longitudinal axis (4, 63) of the arm (6, 61, 71), and with an apparatus for moving the arm (6, 61, 71) in such a way that the tools (12, 50, 50', 72) are introducible into the cavity (66) and a relative movement between the tools and the walls is capable of being generated, **characterised in that** the apparatus for moving the arm (6, 61, 71) includes a device for generating a rotational movement of the arm about its longitudinal axis (4, 63) and is numerically controlled.

10. Apparatus according to claim 9, **characterised in that** the mould (60) is arranged in longitudinal direction horizontally on the table (8) and the arm (6) horizontally on the machine tool table (1).

11. Apparatus according to claim 9 or claim 10,
**characterised in that** devices are provided for generating simultaneous-movements of the table (8) and the arm (6, 61, 71).

12. Apparatus according to one of claims 9 to 11,
**characterised in that** a device is provided for swivelling the table (8) about an axis (11) obliquely to the clamping plane of the table (8), preferably about a vertical axis (11).

13. Apparatus according to one of claims 9 to 12,
**characterised in that** the arm (6, 61, 71) possesses a substantially square cross-section with corner roundings and that the tool (12) is fixed at one end of the arm (6, 61, 71) to a tool supporting disc (15) so as to be exchangeable.

14. Apparatus according to one of claims 9 to 13,
**characterised in that** the axis (13) for the rotational movement of the tool (12) is arranged at a distance (30) from the longitudinal centre line (4) of the arm (6, 61, 71).

15. Apparatus according to claim 14, **characterised in that** the distance (30) of the axis (13) of the tool comes to 10 to 25% of the diameter (31) of a circle inscribable within the cross-section of the arm (6, 61, 71).

16. Apparatus according to one of claims 9 to 15,
**characterised in that** the arm (6, 61, 71) is designed for a working depth of the cavity of roughly half a mould length, preferably for 400 to 600 mm.

17. Apparatus according to one of claims 9 to 16,
**characterised in that** the ratio of the rotational diameter (33) of the tool (12) to the rotational diameter (34) of the arm (6, 61, 71) lies between 1 : 0.7 and 1 : 0.9.

18. Apparatus according to one of claims 9 to 17,
**characterised in that** two disc-shaped polishing tools (50, 50') are provided.

19. Apparatus according to one of claims 9 to 18,
**characterised in that** the apparatus for generating the rotational movement of the tools (12, 50, 50', 72) consists of a drive shaft (27) arranged axially in the arm (6) and toothed gears (28).

20. Apparatus according to one of claims 9 to 18,
**characterised in that** the apparatus for generating the rotational movement of the tools (12, 50, 50', 72) includes a belt drive (76).

21. Apparatus according to one of claims 9 to 20,
**characterised in that** the arm (6, 61, 71) is bent in the longitudinal direction.

22. Apparatus according to one of claims 9 to 21,
**characterised in that** the alignment of the axis (13, 78) is changeable relative to the arm (6, 61, 71).

23. Use of the apparatus according to claim 21 for the working of the walls of a continuous casting mould with a cavity curved in longitudinal direction,
**characterised in that** the bending of the arm (6, 61, 71) is adapted to the shape of the cavity.

## Revendications

1. Procédé pour usiner des parois délimitant une cavité (66) d'une coquille de coulée continue (7, 60) par un ou plusieurs outils d'enlèvement de matière et/ou de polissage, dans lequel on génère un mouvement de rotation de l'outil (12, 50, 50', 72) autour d'un axe (13, 78) qui est agencé sensiblement transversalement à l'axe longitudinal (4, 63) d'un bras (6, 61, 71) susceptible d'être introduit dans la cavité (66) et destiné à porter l'outil, ainsi qu'un mouvement relatif entre l'outil (12, 50, 50', 72) et les parois sur le côté cavité au moyen d'un mouvement du bras (6, 61, 71), **caractérisé en ce que** le mouvement du bras (6, 61, 71) inclut un mouvement de rotation autour de son axe longitudinal (4, 63), et le mouvement du bras est commandé par un calculateur de commande numérique.

2. Procédé selon la revendication 1, **caractérisé en ce que** l'on serre la coquille de coulée continue (7) par son axe longitudinal le long d'un plan de serrage sur une table (8), et on introduit le bras (6, 61, 71) dans la cavité (66) sensiblement parallèlement au plan de serrage.

3. Procédé selon la revendication 2, **caractérisé en ce que** l'on déplace simultanément le bras (6, 61, 71) et la table (8).

4. Procédé selon l'une ou l'autre des revendications 2 et 3, **caractérisé en ce qu'**après usinage de l'une des parois le long d'une longueur partielle de la coquille, de préférence la moitié de la longueur de la coquille, on fait pivoter la table (8) de 180° autour d'un axe (11) qui s'étend perpendiculairement au plan de serrage.

5. Procédé selon l'une des revendications 1 à 4, **caractérisé en ce que** dans une première étape, on amène le bras (6, 61, 71) dans une position d'usinage par un mouvement de rotation autour de son axe longitudinal (4, 63), on le bloque fermement et ensuite on usine un tronçon partiel de l'une des parois au moyen de l'outil (12, 72).

6. Procédé selon l'une des revendications 1 à 5, **caractérisé en ce qu'**avant usinage, on revêt les parois au moins partiellement avec un matériau.

7. Procédé selon l'une des revendications 1 à 6, **caractérisé en ce que** dans une première étape, on usine les parois au moyen d'un ou de plusieurs outils d'enlèvement de matière (12), dans une deuxième étape on remplace le bras (6) par un bras (6) portant un ou plusieurs outils de polissage (50, 50'), et dans une troisième étape on lisse les parois.

8. Procédé selon l'une des revendications 1 à 7, **caractérisé en ce que** l'on contrôle le mouvement relatif entre l'outil (50) et les parois (60) de la coquille de coulée continue au moins partiellement en faisant suivre l'outil (50), de telle sorte que l'outil (50) exerce une pression d'application prédéterminée sur l'une des parois.

9. Dispositif pour usiner des parois qui délimitent une cavité (66) d'une coquille de coulée continue (7, 60), comportant un ou plusieurs outils d'enlèvement de matière et/ou de polissage (12, 50, 50', 72), une table (8) pour serrer la coquille (7, 60) dans un plan de serrage, un bras (6, 61, 71) sur lequel un ou plusieurs des outils (12, 50, 50', 72) sont fixés mobiles en rotation, et comportant un organe pour générer un mouvement de rotation de chacun des outils (12, 50, 50', 72) autour d'un axe respectif (13, 78, 51, 51') agencé sensiblement transversalement à l'axe longitudinal (4, 63) du bras (6, 61, 71), et comportant un organe pour déplacer le bras (6, 61, 71) de telle sorte que les outils (12, 50, 50', 72) peuvent être introduits dans la cavité (66) et qu'un mouvement relatif peut être généré entre les outils et les parois, **caractérisé en ce que** l'organe pour déplacer le bras (6, 61, 71) comprend un système pour générer un mouvement de rotation du bras autour de son axe longitudinal (4, 63) et est pourvu d'une commande numérique.

10. Dispositif selon la revendication 9, **caractérisé en ce que** la coquille (60) est agencée en direction longitudinale horizontalement sur la table (8) et le bras (6) est agencé horizontalement sur le bâti de machine (1).

11. Dispositif selon la revendication 9 ou selon la revendication 10, **caractérisé en ce qu'**il est prévu des organes pour générer des mouvements simultanés de la table (8) et du bras (6, 61, 71).

12. Dispositif selon l'une des revendications 9 à 11, **caractérisé en ce qu'**il est prévu un système pour faire pivoter la table (8) autour d'un axe (11) transversalement au plan de serrage de la table (8), de préférence autour d'un axe vertical (11).

13. Dispositif selon l'une des revendications 9 à 12, **caractérisé en ce que** le bras (6, 61, 71) présente une section transversale sensiblement carrée avec des coins arrondis, et **en ce que** l'outil (12) est fixé de façon interchangeable à une extrémité du bras (6, 61, 71) sur un disque récepteur d'outil (15).

14. Dispositif selon l'une des revendications 9 à 13, **caractérisé en ce que** l'axe (13) pour le mouvement de rotation de l'outil (12) est agencé à une distance (30) de l'axe longitudinal central (4) du bras (6, 61, 71).

15. Dispositif selon la revendication 14, **caractérisé en ce que** la distance (30) de l'axe (13) de l'outil est de 10 à 25 % du diamètre (31) d'un cercle inscriptible dans la section transversale du bras (6, 61, 71).

16. Dispositif selon l'une des revendications 9 à 15, **caractérisé en ce que** le bras (6, 61, 71) est conçu pour une profondeur d'usinage de la cavité approximativement de la moitié de la longueur de la coquille, de préférence pour 400 mm à 600 mm.

17. Dispositif selon l'une des revendications 9 à 16, **caractérisé en ce que** le rapport entre le diamètre de rotation (33) de l'outil (12) et le diamètre de rotation (34) du bras (6, 61, 71) est compris entre 1 : 0,7 et 1 : 0,9.

18. Dispositif selon l'une des revendications 9 à 17, **caractérisé en ce qu'**il est prévu deux outils de polissage (50, 50') en forme de disque.

19. Dispositif selon l'une des revendications 9 à 18, **caractérisé en ce que** l'organe pour générer le mouvement de rotation des outils (12, 50, 50', 72) est constitué par un arbre d'entraînement (27) agencé axialement dans le bras (6) et par des mécanismes à engrenages (28).

20. Dispositif selon l'une des revendications 9 à 18, **caractérisé en ce que** l'organe pour générer le mouvement de rotation des outils (12, 50, 50', 72) comprend un entraînement à courroie (76).

21. Dispositif selon l'une des revendications 9 à 20, **caractérisé en ce que** le bras (6, 61, 71) est incurvé en direction longitudinale.

22. Dispositif selon l'une des revendications 9 à 21, **caractérisé en ce que** l'orientation de l'axe (13, 78) par rapport au bras (6, 61, 71) est variable.

23. Utilisation du dispositif selon la revendication 21 pour usiner les parois d'une coquille de coulée continue comportant une cavité incurvée en direction longitudinale, **caractérisée en ce que** la courbure du bras (6, 61, 71) est adaptée à la forme de la cavité.
